# EUROPEAN PATENT SPECIFICATION

(11) **EP 1 187 283 B1**
(45) Date of publication and mention of the grant of the patent: **10.11.2010**
(21) Application number: 01307606.2
(22) Date of filing: 07.09.2001
(51) Int. Cl.: H02G 3/10

(54) **Electric connection box mounting structure**
Montierungsstruktur für ein elektrisches Verbindungsgehäuse
Structure de montage d'une boîte de connexion électrique

(30) Priority: 08.09.2000 JP 2000273433
(43) Date of publication of application: 13.03.2002
(73) Proprietor: YAZAKI CORPORATION, Minato-ku Tokyo 108-8333 (JP)
(72) Inventor: Ito, Seiji, Susono-shi, Shizuoka (JP); Uematsu, Satoshi, Susono-shi, Shizuoka (JP); Yasuda, Tsukasa, Susono-shi, Shizuoka (JP); Nakatsugawa, Susumu, c/o Yazaki Parts Co., Ltd., Sapporo-shi, Hokkaido (JP)
(74) Representative: Haley, Stephen

(56) References cited:
- US-A- 3 892 911
- US-A- 5 947 435

## Description

This invention relates to a structure of mounting an electric connection box such as a junction block for mounting electric parts of an automobile or the like therein in a collective manner.

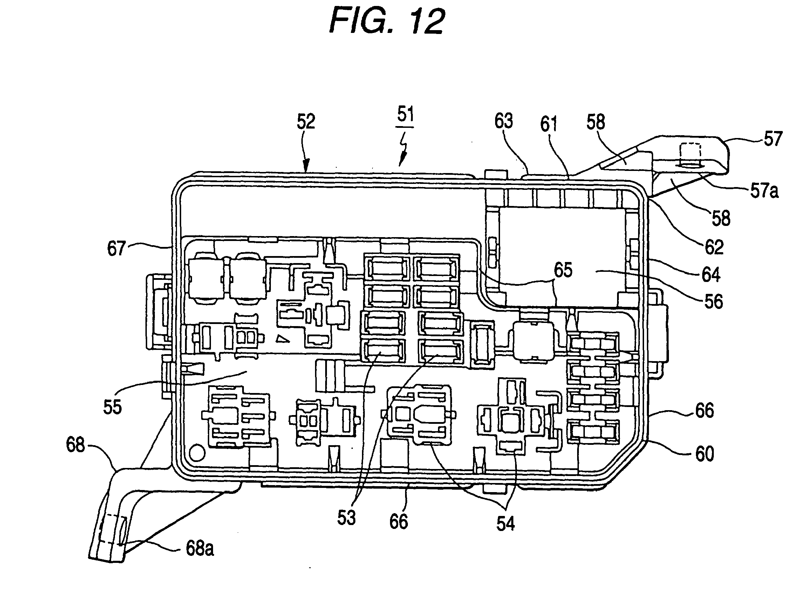

An electric connection box contains a circuit board on which various electric parts such as fuses and relays, used in electric circuits of an electric system of an automobile or the like, are mounted, and such electric connection boxes of various configurations have heretofore been used, depending on the kind of car and the mounting position. For example, in a conventional electric connection box 51 shown in Fig. 12, a first receiving space 55 for mounting and containing fuses 53 and relays 54, is formed in an undercover 52, and a second receiving space 56 for containing other part, such as a connector, is formed at one corner portion of this undercover.

Amounting bracket 57 is formed integrally on outer walls 63 and 64 of the second receiving space 56. This mounting bracket 57 has joint portions 61 and 62 joined to a cover body 60 in such a manner that these joint portions embrace part of the outer walls 63 and 64 of the second receiving space 56 from the outside. A partition wall 65 is provided at the second receiving space 56, and a reinforcing rib 58 for increasing the strength is formed on the mounting bracket 57, and a mounting hole 57a for passing a fastening bolt therethrough is formed in this mounting bracket.

Another mounting bracket 68, having a mounting hole 68a, is provided in a manner to embrace outer walls 66 and 67 of the first receiving space 55 from the outside. This mounting bracket 68 is provided at that portion of the cover body 60 disposed in diagonal relation to the mounting bracket 57, and the mounting hole 68a is formed in a direction different from the direction of boring of the mounting hole 57a in the mounting bracket 57. The electric connection box 51 is fixedly secured by bolts to two mounting surfaces (different in angle from each other) of a vehicle body frame of an automobile or the like through the mounting brackets 57 and 68.

In the above conventional electric connection box 51, however, when the undercover 52, on which the two mounting brackets 57 and 68 are integrally formed at the side wall thereof, is molded in a mold, there is required a slide mold movable in a direction perpendicular to a direction of movement of a movable mold, since the direction of boring of the mounting hole 57a in the mounting bracket 57 is disposed at an angle of about 90 degrees with respect to the direction of boring of the mounting hole 68a in the mounting bracket 68. Therefore, there was encountered a problem that the mold structure was complicated, which increased the cost.

And besides, even when the fastening bolt is in a half-fitted condition, this can not be checked with the eyes since an operating space is narrow, and in some cases the mounting bracket could not be mounted in the proper position. In this case, there were encountered problems that the fastening bolt could not be passed through the mounting hole in the other mounting bracket and that the electric connection box was dislodged out of position during the operation.

This invention seeks to solve the problems of the above conventional electric connection box, and an object of the invention is to provide an electric connection box-mounting structure in which a mounting operation is easy, and an electric connection box can be mounted in an assured manner, and besides the mounting structure can be produced by a simple mold structure.

US-A-3892911 discloses a mounting structure for an electric connection box.

The above problems to be dealt with by the present invention have been solved by a structure for mounting an electric connection box to a wall the structure comprising:
a body of said electric connection box containing an electric circuit;
at least two fixing portions formed on said wall;
a support member for supporting said body, having at least two mounting portions and fixing said electric connection box to said wall;
at least two mounting surfaces facing in different directions formed on said fixing portions;
a first mounting hole formed on a first mounting portion of said mounting portions, an inner surface of said first mounting hole formed in a substantially U-shape or rectangular shape; and
a second mounting hole formed in a second mounting portion of said mounting portions;
wherein fastening bolts projecting from said fixing portions fit in said first and second mounting holes, **characterised in that**:
   a plurality of retaining projections are formed on said inner surface of said first mounting hole and extending in a direction substantially perpendicular to a direction of fitting of said fastening bolts, a pitch of said retaining projections is substantially equal to a pitch of a thread ridge of said fastening bolt and the distance between opposed portions of each of said retaining projections is smaller than a diameter of said fastening bolt, and an open portion of said first mounting hole facing substantially in the same direction as a direction of boring of a second mounting hole formed in the second mounting portion for fitting on fastening bolts projecting at said fixing portions.

Preferably, a projecting piece portion is formed perpendicularly at one end of the mounting surface, and the projecting piece portion abuts at its distal end against the fixing surface when the fastening bolt is completely fitted in the mounting hole.

In another form of the invention, preferably, a surrounding wall is formed perpendicularly on the mounting surface, and substantially surrounds a nut threaded on the fastening bolt.

In the electric connection box-mounting structure of the above construction, the mounting hole in the one mounting portion has a substantially U-shape or a rectangular shape, and has the open portion opening substantially in the same direction as the direction of boring of the mounting holes formed respectively in the other mounting portions, and the plurality of retaining projections are formed on and extend along the inner surface of the mounting hole, and extend in the direction perpendicular to the direction of fitting of the fastening bolt, and the pitch of the retaining projections is substantially equal to the pitch of the thread ridge of the fastening bolt, and the distance between the opposed portions of each of the elongate retaining projections is slightly smaller than the diameter of the fastening bolt.

Therefore, in the operation for mounting the electric connection box, the mounting surface, having the mounting hole, is opposed to the fastening bolt projecting from the fixing surface, and in this condition, when the mounting hole is fitted onto a thread portion of the fastening bolt, the fastening bolt, while interfering with ridges of the retaining projections, is fitted into the mounting hole, so that the electric connection box is provisionally fixed with a one-touch operation in such a manner that the electric connection box is movable toward the open portion of the mounting hole. Then, the position of the mounting portion is adjusted in the direction of opening of the open portion, and then fastening bolts are passed respectively through the mounting holes formed respectively in the other mounting portions, thereby completely fixing the electric connection box.

Although the direction of boring of the mounting hole in the one mounting portion is different from the direction of boring of the mounting holes formed respectively in the other mounting portions, the direction of opening of the open portion is substantially the same as the direction of boring of the mounting holes of the other mounting portions, and therefore the support member of a desired shape can be removed from a mold without the need for using a slide mold.

Therefore, the mounting operation is easy, and the electric connection box can be mounted in an assured manner, and the support member can be produced with a simple mold structure, and the efficiency of the operation can be enhanced, and besides the cost can be reduced.

In the electric connection box-mounting structure, the projecting piece portion is formed perpendicularly at one end of the mounting surface, and this projecting piece portion abuts at its distal end against the fixing surface when the fastening bolt is completely fitted in the mounting hole. Thus, in the completely-fitted condition, the distal end of the projecting piece portion is abutted against the fixing surface . Therefore, the condition of fitting of the mounting hole on the fastening bolt can be easily confirmed, and the efficiency of the mounting operation can be further enhanced, and there can be achieved the electric connection box-mounting structure of high reliability.

In the electric connection box-mounting structure, the surrounding wall is formed perpendicularly on the mounting surface, and substantially surrounds the nut threaded on the fastening bolt. Therefore, in the completely-fitted condition, the nut, fixing the fastening bolt, is surrounded by the surrounding wall, and the electric connection box is supported not only by the bolt and the mounting hole but also by the nut and the surrounding wall, and therefore the disengagement of the mounting portion through the open portion and the substantial displacement of the mounting portion can be positively prevented during the mounting operation.

Therefore, the excessive movement of the electric connection box, which would occur when locating the other mounting portions at their respective proper positions, can be prevented, and the efficiency of the mounting operation can be further enhanced, and there can be achieved the electric connection box-mounting structure of higher reliability.
Fig. 1 is a perspective view showing the process of mounting an electric connection box to which an electric connection box-mounting structure of the invention is applied;
Fig. 2 is a perspective view of an important portion, showing a support member of Fig. 1 as seen from a direction of arrow A;
Fig. 3 is an enlarged, perspective view of an important portion, showing a first embodiment of a mounting portion of the support member of Fig. 2;
Fig. 4 is a front-elevational view of the mounting portion of Fig. 3;
Fig. 5 is a cross-sectional view taken along the line X-X of Fig. 4;
Fig. 6 is a cross-sectional view showing a completely-fitted condition in Fig. 5;
Fig. 7 is a front-elevational view showing another form of a mounting hole in Fig. 4;
Fig. 8 is an enlarged, perspective view of an important portion, showing a second embodiment of a mounting portion of the invention;
Fig. 9 is a cross-sectional view showing a completely-fitted condition in Fig. 8;
Fig. 10 is an enlarged, perspective view of an important portion, showing a third embodiment of a mounting portion of the invention;
Fig. 11 is a cross-sectional view showing a completely-fitted condition in Fig. 10; and
Fig. 12 is a plan view showing a conventional electric connection box-mounting structure.

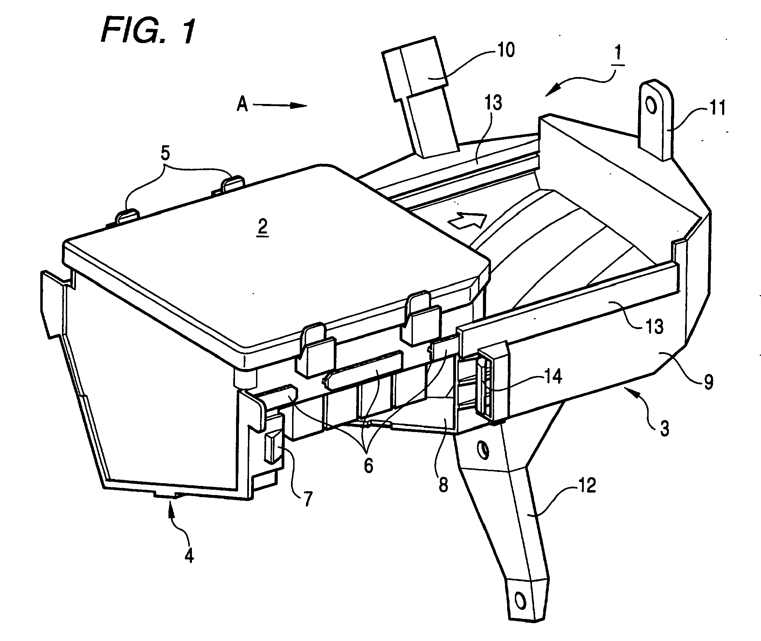

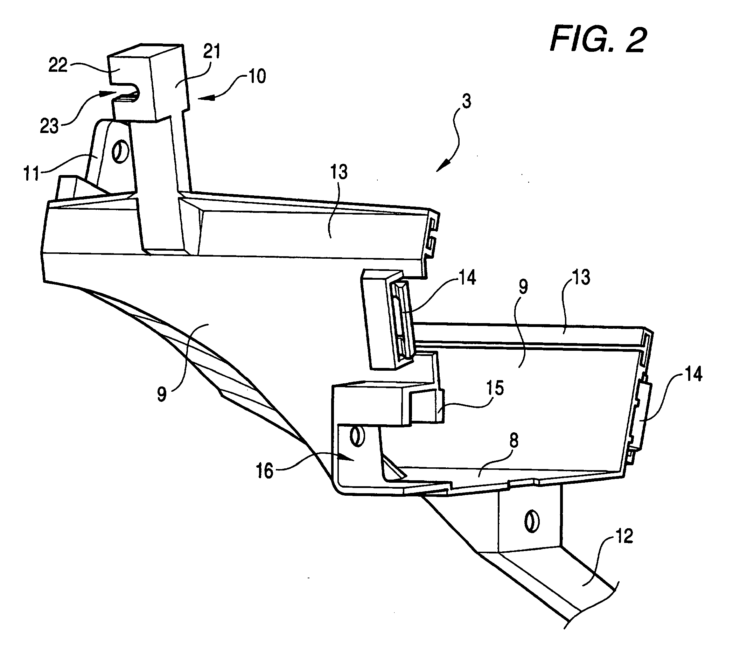

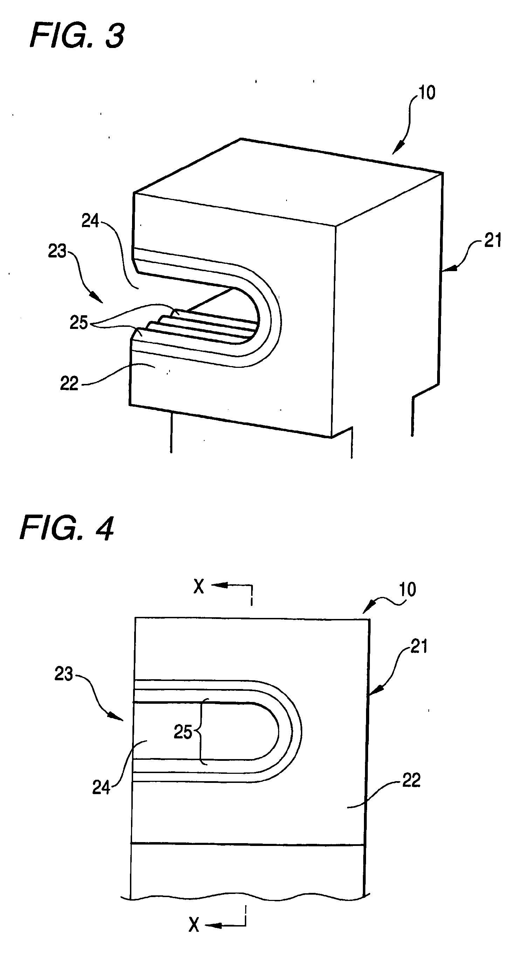

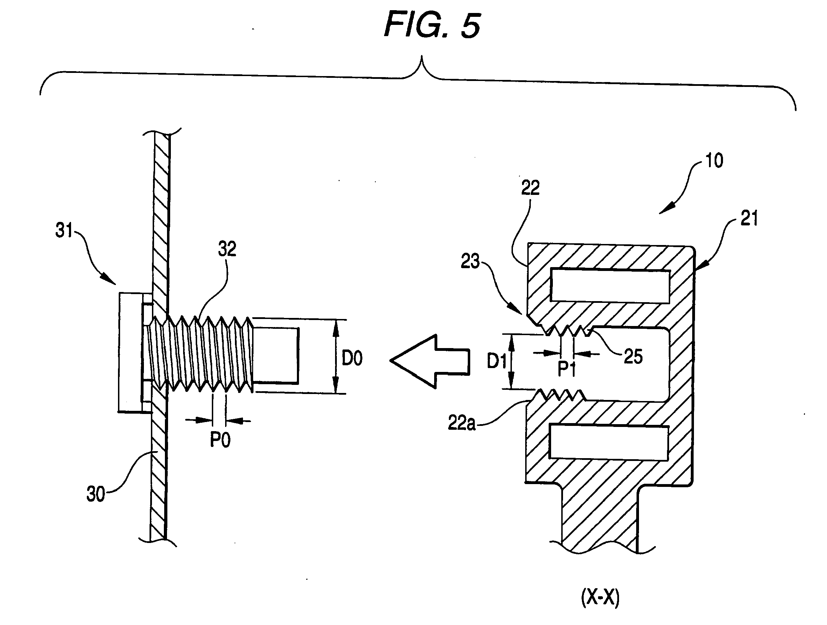

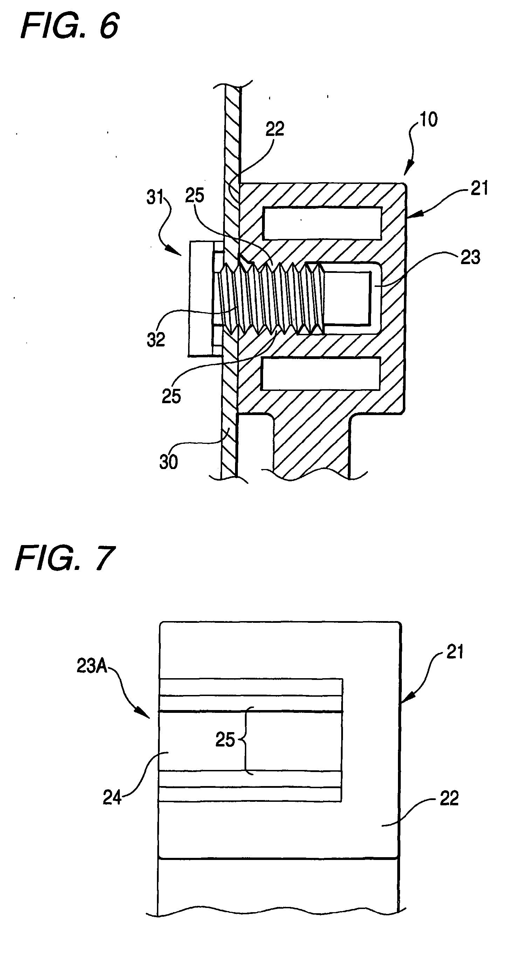

A preferred embodiment of an electric connection box-mounting structure of the present invention will now be described in detail with reference to Figs. 1 to 11. Fig. 1 is a perspective view showing the process of mounting an electric connection box to which the electric connection box-mounting structure of the invention is applied, Fig. 2 is a perspective view of an important portion, showing a support member of Fig. 1 as seen from a direction of arrow A, Fig. 3 is an enlarged, perspective view of an important portion, showing a first embodiment of a mounting portion of the support member of Fig. 2, Fig. 4 is a front-elevational view of the mounting portion of Fig. 3, Fig. 5 is a cross-sectional view taken along the line X-X of Fig. 4, Fig. 6 is a cross-sectional view showing a completely-fitted condition in Fig. 5, and Fig. 7 is a front-elevational view showing another form of a mounting hole in Fig. 4.

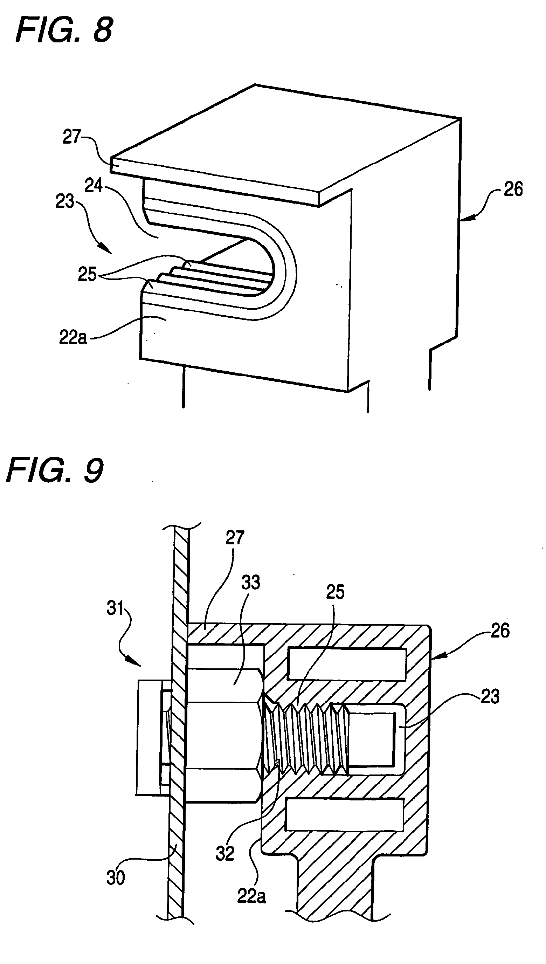

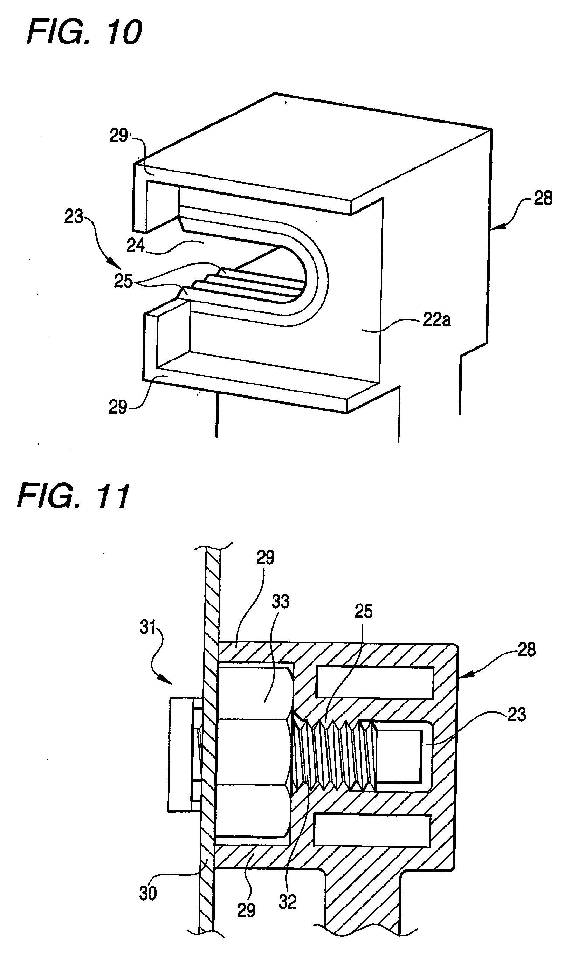

Fig. 8 is an enlarged, perspective view of an important portion, showing a second embodiment of a mounting portion of the invention, Fig. 9 is a cross-sectional view showing a completely-fitted condition in Fig. 8, Fig. 10 is an enlarged, perspective view of an important portion, showing a third embodiment of a mounting portion of the invention, and Fig. 11 is a cross-sectional view showing a completely-fitted condition in Fig. 10.

As show in Figs. 1 and 2, the electric connection box-mounting structure 1 of the invention comprises a junction block body 2 (hereinafter referred to as "JB body"), and a lower cover 3 (serving as the support member), and a side cover 4. Various electric parts, such as a plurality of fuses, a plurality of relays and a connector receiving a plurality of connection terminals, are mounted in this JB body 2, and within this JB body 2, predetermined circuits are formed in a stacked manner by a plurality of bus bars. The side cover 4 of a frame-like shape is attached to the JB body 2. Two pairs of JB body-holding arm lock portions 5 of the cantilever type for retaining the JB body 2 are formed on each of opposed side walls of the side cover 4. Namely, the JB body 2 is attached to the side cover 4 from the upper side, and the side cover 4 is connected in an integrated manner to the JB body 2 by the JB body-holding arm lock portions 5. Rail portions 6 for fitting engagement with the lower cover 3 are formed on the opposed side walls of the side cover 4.

The lower cover 3 is fitted on the JB body 2 to which the side cover 4 is attached, and this lower cover 3 is adapted to be fixedly mounted on fixing surfaces of a vehicle body frame of an automobile or the like. The lower cover 3 includes a bottom portion 8, corresponding in shape to an installation portion, and a side wall portion 9 formed continuously at a peripheral edge of the bottom portion 8. Brackets, serving as mounting portions, are formed at three portions of the lower cover 3, respectively.

More specifically, there are provided the first bracket 10, which serves as a provisionally-fixing mounting portion, and extends upwardly from an upper end of the side wall portion 9, the second bracket 11, which serves as an auxiliary mounting portion, and is different in mounting direction from the first bracket, and the third bracket 12 which serves as a main mounting portion, and is mounted in the same direction as that of the second bracket, and projects from the bottom portion 8.

A pair of rail receiving portions 13 are formed respectively on inner surfaces of opposed side portions of the side wall portion 9 at the upper end portion thereof, and the rail portions 6 of the side cover 4 are fitted in these rail receiving portions 13 so as to move therealong. A pair of side cover-holding arm lock portions 14 of the cantilever type for retaining engagement with lock portions 7 of the side cover 4 are formed at that end of the side wall portion 9 which receives the side cover 4.

Wire harness-fixing ribs 15 for holding a wire harness, as well as a wire harness-receiving portion 16 having a clip hole for fixing the wire harness, are formed at that portion of the end of the side wall portion 9 disposed below one side cover-holding arm lock portion 14.

Next, the construction of the first embodiment of the mounting portion of the first bracket 10 in the electric connection box-mounting structure of the invention will be described.

As shown in Figs. 2 to 4, the first bracket 10 is formed integrally on the upper end of the side wall portion 9 in an upstanding manner, and has the mounting portion 21 of a cubic shape formed at a distal end of an elongate leg portion thereof. One surface (front side surface in Fig. 2) of this mounting portion 21 serves as a mounting surface 22, and a mounting hole 23 of a substantially U-shape is formed in this mounting surface 22, and has an open portion 24 opening substantially in the same direction as the direction of boring of mounting holes formed respectively in the second and third brackets 11 and 12.

Four elongate retaining projections 25 are formed on and extend along an inner surface of the mounting hole 23, and these projections 25 extend along the direction of opening of the open portion 24. Namely, the elongate retaining projections 25 of a substantially U-shape are formed on the inner surface of the mounting hole 23, and are juxtaposed to one another in a manner corresponding to a thread ridge of a fastening bolt (described later) . This mounting hole 23 is fitted on a thread portion of the fastening bolt in such a manner that that side of this mounting hole 23, which is open to the mounting surface 22 (the front surface in Fig. 3), first fits on the thread portion.

As shown in Fig. 5, the distance D1 between the opposed portions of each retaining projection 25, formed on the inner surface of the mounting hole 23 in the mounting portion 21, is slightly smaller than the diameter D0 of the fastening bolt 31. The pitch P1 of any two adjacent retaining projections 25 and 25 is substantially equal to the pitch P0 of the thread ridge.of the fastening bolt 31.

Each elongate retaining projection 25, which is curved into a U-shape, is disposed on a such plane that the starting end of the retaining projection 25 is offset from the terminal end thereof by an amount equal to a half of the pitch P1. A slanting surface 22a for introducing the distal end of the fastening bolt 31 is formed at an edge of the inlet of the mounting hole 23.

Therefore, when the mounting portion 21 of the first bracket 10 is attached to the fastening bolt 31, fixedly mounted on a mounting plate 30, from a direction of an arrow (Fig. 5), the fastening bolt 31 is inserted into the mounting portion 21 while the thread portion 32 of the fastening bolt 31 interferes with the retaining projections 25 in the mounting hole 23, since the direction of extending of the retaining projections 25 is perpendicular to the direction of insertion of the fastening bolt 31.

Then, when the mounting portion 21 is fitted on the fastening bolt 31 until the mounting surface 22 is brought into abutting engagement with the mounting plate 30 as shown in Fig. 6, the ridge of the thread portion 32 is engaged in the grooves each formed between the adjacent retaining projections 25 and 25, and therefore the mounting portion 21 is thus provisionally fixed with a one-touch operation in such a manner that this mounting portion is prevented from moving in a direction perpendicular to the mounting plate 30, but is movable along the direction of opening of the open portion 24 (see Fig. 3)

There can be used another mounting method in which the open portion 24 of the mounting hole 23 is fitted on the thread portion 32 of the fastening bolt 31 from the side of this thread portion 32, and the mounting portion is moved along the retaining projections 25, and with this method, the mounting portion can be more easily mounted.

Thereafter, in this condition, the mounting holes, formed respectively in the second and third brackets 11 and 12, are positioned relative to installation portions of the vehicle body frame, respectively, and then these brackets are completely fixedly secured respectively to these installation portions by fastening bolts or the like. Therefore, the operation for mounting the lower cover 3, holding the JB body 2, is easy, and the lower cover can be mounted in an assured manner, and the efficiency of the operation can be enhanced.

For removing the first bracket 10 from the mounting plate 30, the mounting portion 21 is moved in such a direction that the thread portion 32 of the fastening bolt 31 is withdrawn from the open portion 24 of the mounting hole 23 (see Fig. 3), and in other words, the mounting portion 21 is moved relative to the thread portion 32 along the retaining projections 25 in a direction away from the outer side of the open portion 24, and by doing so, the first bracket 10 can be easily removed from the mounting plate 30.

With respect to a modified example of the above mounting hole, there may be used a mounting hole 23A of a rectangular shape having an open portion 24 opening substantially in the same direction as the direction of boring of the mounting holes formed respectively in the second and third brackets 11 and 12. In this case, each of retaining projections 25 is divided into upper and lower sections in the mounting holes 23A.

Next, description will be made of a method of producing the lower cover 3 of the above construction used in the electric connection box-mounting structure.

As described above, although the direction of boring of the mounting hole 23 in the first bracket 10 is different from the direction of boring of the mounting holes formed respectively in the second and third brackets 11 and 12, the direction of opening of the open portion 24 of the mounting hole 23 is substantially the same as the direction of boring of the mounting holes of the second and third brackets 11 and 12, and therefore the lower cover 3 of the desired shape can be removed from a mold without the need for using a slide mold. Therefore, the lower cover can be produced by the simple mold structure, and the cost can be reduced.

Next, the construction of the second embodiment of the mounting portion of the first bracket 10 in the electric connection box-mounting structure of the invention will be described. Those portions, identical in construction to those of the first embodiment, will be designated by identical reference numerals, respectively, and detailed description of the constructions and operations thereof will be omitted.

As shown in Figs. 8 and 9, the mounting portion 26 of the first bracket 10 has a mounting surface 22a (front side surface in Fig. 8) for abutting engagement with a nut (described later). A projecting piece portion 27 is formed perpendicularly at an upper end of this mounting surface 22a, and this projecting piece portion 27 abuts at its distal end against a mounting plate 30 when a fastening bolt 31 is completely fitted in a mounting hole 23. The fastening bolt 31 is fixedly secured to the mounting plate 30 by the nut 33. Therefore, the amount of projecting of the projecting piece portion 27 is equal to the height of the nut 33 as shown in Fig. 9.

Therefore, when the completely-fitted condition is achieved, the distal end of the projecting piece portion 27 abuts against the mounting plate 30, and also the mounting surface 22a abuts against the nut 33, so that the mounting portion 26 is fixed to the fastening bolt 31 in the completely-fitted condition. Therefore, the fitted condition of the mounting hole 23 can be easily confirmed with the eyes, and the efficiency of the operation for mounting a lower cover 3, holding a JB body 2, can be further enhanced.

For removing the first bracket 10 from the mounting plate 30, the mounting portion 26 is moved in such a direction that a thread portion 32 of the fastening bolt 31 is withdrawn from the mounting hole 23 through an open portion 24, and in other words, the mounting portion 26 is moved relative to the thread portion 32 along retaining projections 25 in a direction away from the outer side of the open portion 24, and by doing so, the first bracket 10 can be easily removed from the mounting plate 30.

Next, the construction of the third embodiment of the mounting portion of the first bracket 10 in the electric connection box-mounting structure of the invention will be described. Those portions, identical in construction to those of the first embodiment, will be designated by identical reference numerals, respectively, and detailed description of the constructions and operations thereof will be omitted.

As shown in Figs. 10 and 11, the mounting portion 28 of the first bracket 10 has a mounting surface 22a for abutting engagement with a nut 33 threaded on a fastening bolt 31. A surrounding wall 29 is formed perpendicularly on this mounting surface 22a in substantially surrounding relation to the nut 33. That portion of the surrounding wall 29, disposed at an open portion 24 of a mounting hole 23, is notched, and this surrounding wall 29 is not formed on that side (right end portion in Fig. 10) of the mounting surface 22a remote from the open portion 24. The fastening bolt 31 is fixedly secured to a mounting plate 30 by the nut 33. Therefore, the amount of projecting of the surrounding wall 29 is equal to the height of the nut 33 as shown in Fig. 11.

Therefore, when the distal end of the surrounding wall 29 abuts against the mounting plate 30 while the mounting surface 22a abuts against the nut 33, the mounting portion 28 is fixed to the fastening bolt 31 in a completely-fitted condition. At this time, a lower cover 3, holding a JB body 2, is supported not only by the fastening bolt 31 and the mounting hole 23 but also by the nut 33 and the surrounding wall 29, and therefore the disengagement of the mounting portion through the open portion 24 and the substantial displacement of the mounting portion can be positively prevented during the mounting operation.

Therefore, the excessive movement of the lower cover 3, which would occur when locating second and third brackets 11 and 12 at their respective proper positions, can be prevented, and the efficiency of the mounting operation can be further enhanced.

The electric connection box-mounting structures of the present invention are not limited to the above embodiments, but can be suitably modified. For example, in the first embodiment, although the inner end of the mounting hole 23 of the mounting portion 21 is closed by the side wall of the mounting portion 21, the mounting hole 23 can be formed as a through hole having the open portion 24. Although there are provided the four elongate retaining projections 25, the number of the retaining projections can be increased or decreased depending on the length of the thread portion 32 of the fastening bolt 31.

In the second embodiment, although the projecting piece portion 27 is formed at the upper end of the mounting surface 22a, this projecting piece portion can be formed at a side end of the mounting surface 22a, depending on the mounting position.

As described above, in the electric connection box-mounting structure of the present invention, the mounting hole in the one mounting portion has a substantially U-shape or a rectangular shape, and has the open portion opening substantially in the same direction as the direction of boring of the mounting holes formed respectively in the other mounting portions, and the plurality of retaining projections are formed on and extend along the inner surface of the mounting hole, and extend in the direction perpendicular to the direction of fitting of the fastening bolt, and the pitch of the retaining projections is substantially equal to the pitch of the thread ridge of the fastening bolt, and the distance between the opposed portions of each of the elongate retaining projections is slightly smaller than the diameter of the fastening bolt.

Therefore, in the operation for mounting the electric connection box, when the mounting hole is fitted onto the thread portion of the fastening bolt, the fastening bolt, while interfering with ridges of the retaining projections, is fitted into the mounting hole, so that the electric connection box is provisionally fixed with the one-touch operation in such a manner that the electric connection box is movable toward the open portion of the mounting hole.

The direction of opening of the open portion in the mounting portion is substantially the same as the direction of boring of the mounting holes of the other mounting portions, and therefore the support member can be removed from the mold without the need for using a slide mold. Therefore, the mounting operation is easy, and the electric connection box can be mounted in an assured manner, and the support member can be produced with the simple mold structure, and the efficiency of the operation can be enhanced, and besides the cost can be reduced.

In the electric connection box-mounting structure, the projecting piece portion is formed perpendicularly at one end of the mounting surface, and this projecting piece portion abuts at its distal end against the fixing surface when the fastening bolt is completely fitted in the mounting hole. Therefore, the condition of fitting of the mounting hole on the fastening bolt can be easily confirmed, and the efficiency of the mounting operation can be further enhanced, and there can be achieved the electric connection box-mounting structure of high reliability.

In the electric connection box-mounting structure, the surrounding wall is formed perpendicularly on the mounting surface, and substantially surrounds the nut threaded on the fastening bolt. Therefore, the electric connection box is supported not only by the bolt and the mounting hole but also by the nut and the surrounding wall, and therefore the disengagement of the mounting portion through the open portion and the substantial displacement of the mounting portion can be positively prevented during the mounting operation. Therefore, the efficiency of the mounting operation can be further enhanced, and there can be achieved the electric connectionbox-mounting structure of higher reliability.

## Claims

1. A structure (1) for mounting an electric connection box to a wall the structure comprising:
a body (2) of said electric connection box containing an electric circuit;
at least two fixing portions formed on said wall;
a support member (10) for supporting said body, having at least two mounting portions (21) and fixing said electric connection box to said wall;
at least two mounting surfaces (22) facing in different directions formed on said fixing portions;
a first mounting hole (23) formed on a first mounting portion (21) of said mounting portions, an inner surface of said first mounting hole formed in a substantially U-shape or rectangular shape; and
a second mounting hole formed in a second mounting portion of said mounting portions;
wherein fastening bolts (31) projecting from said fixing portions fit in said first and second mounting holes, **characterised in that**:
a plurality of retaining projections are formed on said inner surface of said first mounting hole and extending in a direction substantially perpendicular to a direction of fitting of said fastening bolts, a pitch of said retaining projections is substantially equal to a pitch of a thread ridge (32) of said fastening bolt and the distance between opposed portions of each of said retaining projections is smaller than a diameter of said fastening bolt, and an open portion of said first mounting hole facing substantially in the same direction as a direction of boring of a second mounting hole formed in the second mounting portion for fitting on fastening bolts projecting at said fixing portions.

2. The structure (1) for mounting the electric connection box according to claim 1,
wherein a projecting piece portion is formed perpendicularly at one end of said first mounting surface (22), and said projecting piece portion abuts at a distal end thereof against said fixing wall when said fastening bolt (31) is completely fitted in said mounting hole (23).

3. The structure (1) for mounting the electric connection box according to claim 1 or claim 2,
wherein a surrounding wall is formed perpendicularly on said first mounting surface (21), and substantially surrounds a nut (33) threaded on said fastening bolt (31).

## Patentansprüche

1. Anordnung zum Befestigen eines Elektroanschlusskastens an einer Wand umfassend
einen Körper (2) des Elektroanschlusskastens, der einen elektrischen Schaltkreis einhält,
wenigstens zwei Befestigungsabschnitte, die an der Wand ausgebildet sind,
ein Stützelement (10) zum Abstützen des Körpers, das wenigstens zwei Montageabschnitte (21) aufweist und den Elektroanschlusskasten an der Wand festlegt,
wenigstens zwei Montageflächen (22), die in unterschiedliche Richtungen weisen und an den Befestigungsabschnitten ausgebildet sind,
einen ersten Montagedurchbruch (23), der an einem ersten Montageabschnitt (21) der Montageabschnitte ausgebildet ist, wobei eine Innenfläche des ersten Montagedurchbruchs im wesentlichen U-förmig oder rechteckig ausgebildet ist, und
einen zweiten Montagedurchbruch, der in einem zweiten Montageabschnitt der Montageabschnitte ausgebildet ist,
wobei von den Befestigungsabschnitten vorragende Befestigungsbolzen (31) in den ersten und die zweiten Montagedurchbruch passen,
**dadurch gekennzeichnet,**
**dass** eine Mehrzahl von Haltevorsprüngen an der Innenfläche des ersten Montagedurchbruchs ausgebildet sind und diese sich in einer Richtung erstrecken, die im Wesentlichen rechtwinklig zu einer Befestigungsrichtung der Befestigungsbolzen ausgerichtet ist, wobei ein Teilungsabstand der Haltevorsprünge im Wesentlichen gleich einer Steigung der Gewindespitzen (32) des Befestigungsbolzens ist und der Abstand zwischen gegenüberliegenden Abschnitten jedes Haltevorsprungs kleiner als ein Durchmesser des Befestigungsbolzens ist und wobei ein offener Abschnitt des ersten Montagedurchbruchs im wesentlichen in die gleiche Richtung weist wie eine Bohrrichtung eines zweiten Montagedurchbruchs, der in dem zweiten Montageabschnitt zum Befestigen an Befestigungsbolzen, die an den Befestigungsabschnitten vorragen, ausgebildet ist.

2. Anordnung zum Befestigen eines Elektroanschlusskastens gemäß Anspruch 1,
wobei ein vorragender Abschnitt rechtwinklig an einem Ende der ersten Montagefläche (22) ausgebildet ist und wobei der vorragende Abschnitt an seinem distalen Ende gegen die Befestigungswand anliegt, wenn der Befestigungsbolzen (31) vollständig in den Montagedurchbruch (23) eingeführt ist.

3. Anordnung zum Befestigen eines Elektroanschlusskastens gemäß Anspruch 1 oder 2,
wobei eine Umfassungswand rechtwinklig an der ersten Montagefläche (21) ausgebildet ist und eine Mutter (33) im Wesentlichen umschließt, die auf den Befestigungsbolzen (31) geschraubt ist.

## Revendications

1. Structure (1) pour le montage d'une boîte de connexion électrique sur une paroi, la structure comportant :
un corps (2) de ladite boîte de connexion électrique contenant un circuit électrique ;
au moins deux parties de fixation formées sur ladite paroi ;
un élément de support (10) destiné à supporter ledit corps, ayant au moins deux parties de montage (21) et fixant ladite boîte de connexion électrique sur ladite paroi ;
au moins deux surfaces de montage (22) orientées dans des directions différentes formées sur lesdites parties de fixation ;
un premier trou de montage (23) formé sur une première partie de montage (21) desdites parties de montage, une surface intérieure dudit premier trou de montage étant formée avec une forme sensiblement en U ou rectangulaire ; et
un deuxième trou de montage formé dans une deuxième partie de montage desdites parties de montage ;
des boulons de serrage (31) dépassant desdites parties de fixation étant montés dans lesdits premier et deuxième trous de montage, **caractérisée en ce que** :
une multiplicité de saillies de retenue est formée sur ladite surface intérieure dudit premier trou de montage et en s'étendant dans une direction sensiblement perpendiculaire à une direction de montage desdits boulons de serrage, un pas desdites saillies de retenue est sensiblement égal à un pas d'une gorge de filet (32) dudit boulon de serrage et la distance entre des parties opposées de chacune desdites saillies de retenue est plus petite qu'un diamètre dudit boulon de serrage, et une partie ouverte dudit premier de trou de montage est orientée sensiblement dans la même direction qu'une direction de perçage d'un deuxième trou de montage formé dans la deuxième partie de montage pour le montage des boulons de serrage qui dépassent desdites parties de fixation.

2. Structure (1) pour le montage de la boîte de connexion électrique selon la revendication 1,
dans laquelle une partie de pièce saillante est formée perpendiculairement à une extrémité de ladite première surface de montage (22), et ladite partie de pièce saillante bute à une extrémité distale contre ladite paroi de fixation quand ledit boulon de serrage (31) est complètement monté dans ledit trou de montage (23).

3. Structure (1) pour le montage de la boîte de connexion électrique selon la revendication 1 ou la revendication 2,
dans laquelle une paroi périphérique est formé perpendiculairement sur ladite première surface de montage (21), et entoure de manière substantielle un écrou (33) vissé sur ledit boulon de serrage (31).
